# EUROPEAN PATENT SPECIFICATION

(11) **EP 3 676 116 B1**
(45) Date of publication and mention of the grant of the patent: **02.06.2021**
(21) Application number: 18759917.0
(22) Date of filing: 21.08.2018
(51) Int. Cl.: B60J 1/20, B60J 7/00

(54) **SHADE ROLLER APPARATUS**
JALOUSIEVORRICHTUNG
APPAREIL POUR ROULEAU DE STORE

(30) Priority: 31.08.2017 JP 2017167072
(43) Date of publication of application: 08.07.2020
(73) Proprietor: Webasto SE, 82131 Stockdorf (DE)
(72) Inventor: YONEZAWA, Kouhei, Higashihiroshima-shi Hiroshima 739-0038 (JP)
(74) Representative: Epping - Hermann - Fischer
(86) International application number: PCT/EP2018/072538
(87) International publication number: WO 2019/042820

(56) References cited:
- EP-A1- 2 329 978
- EP-A1- 2 730 441
- DE-A1-102010 020 526
- JP-A- 2002 054 369

## Description

### TECHNICAL FIELD

The present disclosure relates to a shade roller apparatus configured to shade a window formed at a roof of a vehicle, and particularly relates to a structure of a portion where a pull bar is attached to a shading sheet.

### BACKGROUND ART

Typically, in a vehicle configured such that a window is formed at a roof, a shade roller apparatus configured to shade the window is provided (see, e.g., Patent Document 1). The shade roller apparatus has a shading sheet, a roller around which the shading sheet is rolled, and a pull bar attached to a front end of the shading sheet. The roller is arranged below the window, and is configured so that the shading sheet can be rolled around the roller. The shading sheet is configured to open the window in a state in which the shading sheet is rolled around the roller and to screen the window when the pull bar at the front end is pulled to below a front hem of the window.

### CITATION LIST

### PATENT DOCUMENT

PATENT DOCUMENT 1: Japanese Unexamined Patent Publication No. 2002-054369

### SUMMARY OF THE INVENTION

### TECHNICAL PROBLEM

However, in the above-described configuration, even when the shading sheet screens the window, if there is a clearance between the shading sheet and another member such as a head lining as an interior material in a vehicle, light enters a vehicle compartment through the clearance. This lowers shading properties. On the other hand, when it is designed such that the height of the shading sheet is lowered to eliminate the above-described clearance to enhance the shading properties, a hem portion (particularly right and left hem portions) of the shading sheet is constantly frictioned against the head lining upon opening/closing of the shading sheet, leading to a probability that the shading sheet is worn.

The present disclosure has been made in view of the above-described problem, and an object of the present disclosure is to enhance shading properties of a shading sheet and reduce wear due to friction against other members.

### SOLUTION TO THE PROBLEM

A first aspect of the present disclosure is based on a shade roller apparatus including a shading sheet (51), a roller (60) around which the shading sheet (51) can be rolled and from which the shading sheet (51) can be unrolled, and a pull bar (70) attached to a front hem of the shading sheet (51) in an unrolling direction thereof. The shade roller apparatus is configured to open/close a window (3) formed at a roof (1) of a vehicle with the shade sheet (51).

In the shade roller apparatus, the pull bar (70) includes a sheet retainer (71) configured to retain the shading sheet (51), and a bottom wall (75) located below the sheet retainer (71). Elastic pad (55) is provided between the bottom wall (75) and the shading sheet (51). The elastic pad (55) includes end portions arranged at at least both end portions of the pull bar (70). The elastic pad (55) is made of a material exhibiting more elasticity than the pull bar (70).

In the first aspect of the present disclosure, the elastic pad (55) is provided between the bottom wall (75) of the pull bar (70) and the shading sheet (51). Thus, the position of the shading sheet (51) in a height direction thereof can be lowered to close a clearance between the shading sheet (51) and another member such as a head lining as an interior material in a vehicle. Moreover, the position of the shading sheet (51) in the height direction is lowered using the elastic pad (55). Thus, even when the shading sheet (51) is frictioned against another member such as the head lining, force receiving the shading sheet (51) at this point is small. In particular, when the shading sheet (51) is opened/closed in a vehicle front-to-back direction, right and left hem portions of the shading sheet (51) contact other members such as the head lining, but the force received by the shading sheet (51) is reduced at the right and left hem portions.

A second aspect of the present disclosure is the shade roller apparatus of the first aspect of the present disclosure, in which the elastic pad (55) is arranged to extend along the entire length of the pull bar (70).

In the second aspect of the present disclosure, the elastic pad (55) is arranged to extend along the entire length of the pull bar (70). Thus, in a case where the entirety of the shading sheet (51) contacts other members such as the head lining, the force received by the shading sheet (51) is reduced across the entirety of the shading sheet (51).

A third aspect of the present disclosure is the shade roller apparatus of the first or second aspect of the present disclosure, in which the elastic pad (55) is arranged between bottom and front surfaces of the pull bar (70) and the shading sheet (51).

In the third aspect of the present disclosure, the elastic pad (55) is arranged between the bottom and front surfaces of the pull bar (70) and the shading sheet (51), and the shade roller apparatus is provided above a passenger of the vehicle. Thus, the shading sheet (51) is opened/closed in a state in which the elastic pad (55) is positioned in a direction facing the passenger (on bottom and front sides of the pull bar (70)).

### ADVANTAGES OF THE INVENTION

According to the present disclosure, the elastic pad (55) is provided between the bottom wall (75) of the pull bar (70) and the shading sheet (51). Thus, the position of the shading sheet (51) in the height direction can be lowered to close the clearance between the shading sheet (51) and another member such as the head lining as the interior material in the vehicle. Thus, shading properties can be enhanced. Moreover, the position of the shading sheet (51) in the height direction is lowered using the elastic pad (55). Thus, even when the shading sheet (51) is frictioned against other members such as the head lining, the force received by the shading sheet (51) at this point is reduced, and therefore, wear of the shading sheet (51) particularly at the right and left hem portions can be reduced. Further, the elastic pad (55) is provided between the shading sheet (51) and the pull bar (70), and therefore, a problem that the shading sheet (51) is wrinkled due to position shift between the shading sheet (51) and the pull bar (70) can be also reduced.

According to the above-described second aspect of the present disclosure, the elastic pad (55) is arranged to extend along the entire length of the pull bar (70). Thus, in a case where the entirety of the shading sheet (51) contacts other members such as the head lining, the force received by the shading sheet (51) is reduced across the entirety of the shading sheet (51). Thus, wear can be reduced across the entirety of the shading sheet (51).

According to the above-described third aspect of the present disclosure, the elastic pad (55) is arranged between bottom and front sides of the pull bar (70), and the shade roller apparatus is provided above the passenger of the vehicle. Thus, the shading sheet (51) is opened/closed in a state in which the elastic pad (55) of the pull bar (70) is positioned in the direction facing the passenger (on the bottom and front sides of the pull bar (70)). Consequently, a portion where the pull bar (70) might contact the passenger is the elastic pad (55), and no problem is caused even upon contact with the passenger.

### BRIEF DESCRIPTION OF THE DRAWINGS

[FIG. 1] FIG. 1 is a perspective view of a sunroof apparatus of an embodiment of the present disclosure in a fully-closed state.
[FIG. 2] FIG. 2 is an exploded perspective view of the sunroof apparatus of the embodiment.
[FIG. 3] FIG. 3 is a sectional view of a configuration of front and rear end portions of a front-side shade roller apparatus of the embodiment.
[FIG. 4] FIG. 4 is an enlarged sectional view of a structure of a pull bar of the embodiment.
[FIG. 5] FIG. 5 is a view of the step of pressing a shading sheet with the shading sheet being clipped by the pull bar of the embodiment.
[FIG. 6] FIG. 6 is an enlarged sectional view of a main portion of the pull bar of the embodiment.
[FIG. 7] FIG. 7 is a bottom view of the pull bar of the embodiment.
[FIG. 8] FIG. 8 is an enlarged sectional view of a pull bar of a variation.

### DESCRIPTION OF EMBODIMENTS

Hereinafter, an embodiment of the present disclosure will be described in detail with reference to the drawings. The present embodiment is an example where a shade roller apparatus (50) of the present disclosure is incorporated into a sunroof apparatus (10) attached to a roof (1) of a vehicle. Note that the following description of a preferable embodiment will be merely an example in nature, and is not intended to limit the present disclosure, applications of the present disclosure, and use of the present disclosure.

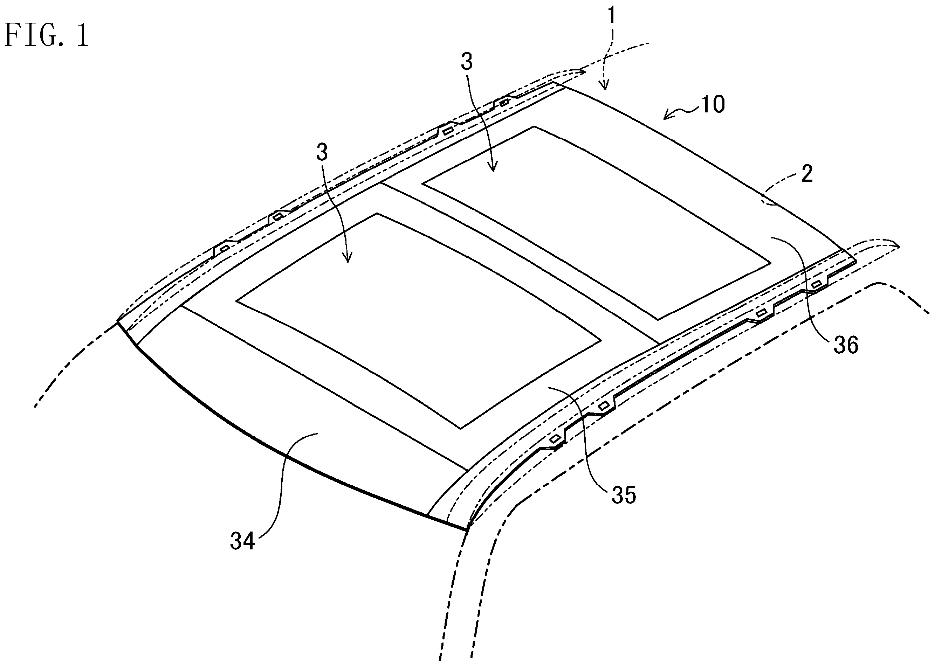

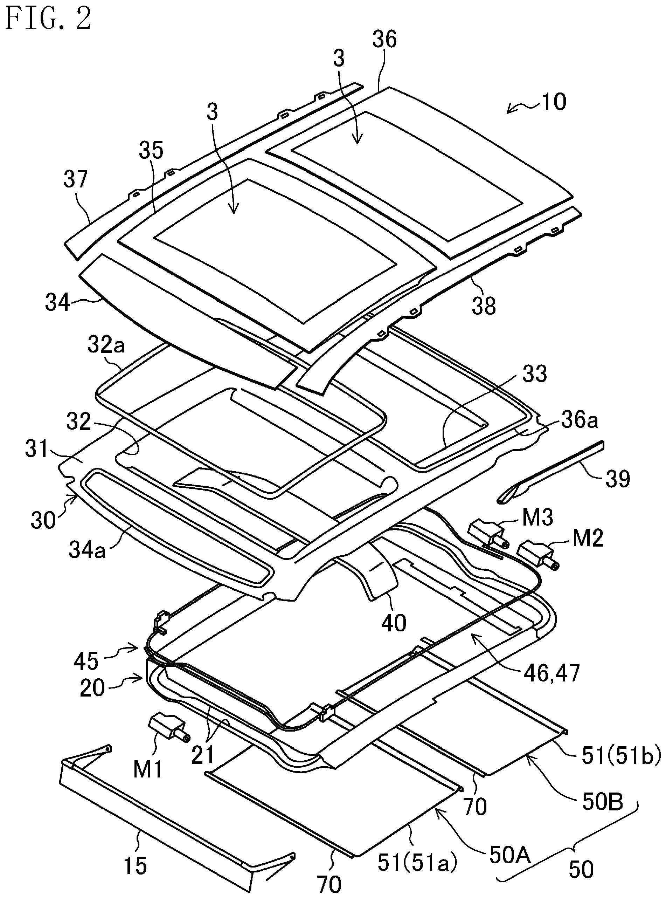

FIG. 1 is a perspective view of the sunroof apparatus (10) in a fully-closed state, and FIG. 2 is an exploded perspective view of the sunroof apparatus (10). Note that for the sake of convenience in description, a front side in a vehicle front-to-rear direction will be, in the present specification, referred to as a "front," and a rear side will be referred to as a "rear." A left side in a vehicle width direction will be referred to as a "left (L)," and a right side will be referred to as a "right (R)."

### <Outline Configuration of Sunroof Apparatus>

The sunroof apparatus (10) is placed at an opening (2) formed at the roof (1) of the vehicle. As illustrated in FIG. 2, the sunroof apparatus (10) has a frame assembly (20) including multiple aluminum components, and a reinforced-plastic housing (30) attached to the frame assembly (20) from above. The frame assembly (20) is a frame-shaped member, and the housing (30) is a member configured such that openings (32, 33) are formed at the front and rear sides of a housing base material (31). The frame assembly (20) is attached below the housing (30), and a reinforcement member (40) extending in the right-to-left direction is attached below the frame assembly (20).

Three glass panels (a front-side fixed glass panel (34), a movable glass panel (35), and a rear-side fixed glass panel (36)) and side fins (37, 38) positioned on the right and left sides of each glass panel are attached to an upper surface of the housing base material (31).

The front-side fixed glass panel (34) is fixed to a front end portion of the housing base material (31) through a seal material (34a). The movable glass panel (35) is attached to the frame assembly (20) to advance/retreat in the front-to-rear direction. The rear-side fixed glass panel (36) is arranged to cover the rear-side opening (33) of the housing (30) through a seal material (36a). An outer rail (39) is, as a guide upon advancing/retreating of the movable glass panel, provided between the housing base material (31) and each of the right and left side fins (37, 38).

The front-side fixed glass panel (34) is a panel made of so-called smoked glass. Similarly, the movable glass panel (35) and the rear-side fixed glass panel (36) are also panels made of smoked glass and exhibiting translucency, and form a window (3) of the roof of the vehicle.

The shade roller apparatus (50) having a shading sheet (51) capable of screening the window (3) is provided below the sunroof apparatus (10). The shade roller apparatus (50) includes a front-side shade roller apparatus (50A) and a rear-side shade roller apparatus (50B) so that two shading sheets (51a, 51b) can be separately opened/closed.

The frame assembly (20) is loaded with a pair of push-pull cables (45) coupled to the movable glass panel (35) through a drive mechanism and two pairs of push-pull cables (46, 47) configured to separately drive the front-side and rear-side shade roller apparatuses (50A, 50B). At the frame assembly (20), a cable groove (21) configured such that each push-pull cable (45, 46, 47) is loaded in the cable groove (21) is formed.

A single front-side motor (M1) and two rear-side motors (M2, M3) are attached to a lower surface of the housing (30). The front-side motor (M1) meshes with the push-pull cables (45) configured to drive the front-side shade roller apparatus (50A). The rear-side motors (M2, M3) are coupled to the movable glass panel (35) and the rear-side shade roller apparatus (50B) through the push-pull cables (46, 47).

A weather strip (32a) is attached to the edge of the front-side opening (32) of the housing base material (31). In a closed state, the movable glass panel (35) closely contacts the weather strip (32a), thereby screening the front-side opening (32) of the housing base material (31). A deflector (15) is provided on a front end side of the front-side opening (32) of the housing base material (31). The deflector (15) is housed between the movable glass panel (35) and the housing base material (31) at a position at which the movable glass panel (35) closes the opening, and stands to serve as protection against wind when the movable glass panel (35) retreats to open the opening (32).

### <Shade Roller Apparatus>

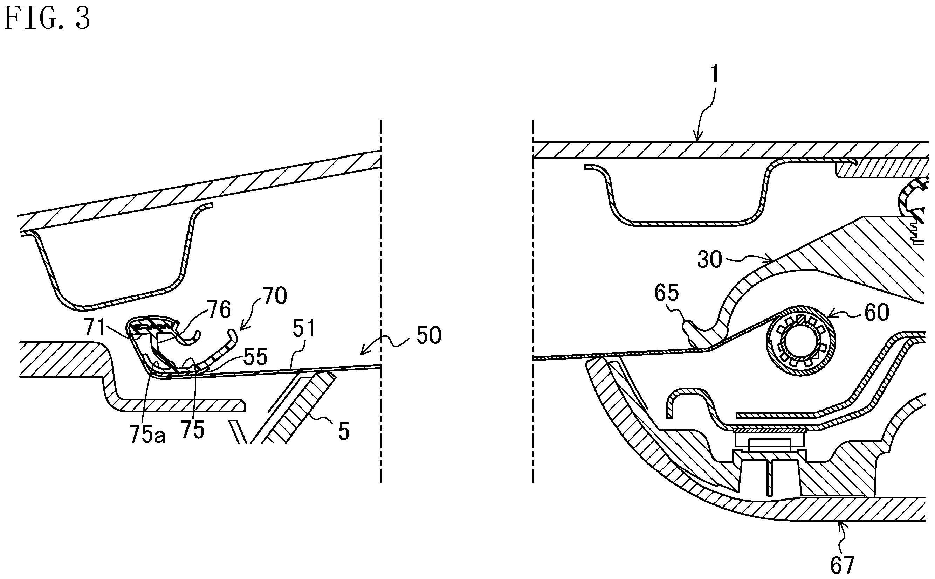

The shade roller apparatus (50) is provided at such a position that the window (3) formed at the roof (1) of the vehicle is opened/closed by the shading sheets (51a, 51b), and as described above, includes the front-side shade roller apparatus (50A) and the rear-side shade roller apparatus (50B). FIG. 3 is a sectional view of a configuration of front and rear end portions of the front-side shade roller apparatus (50A). A common basic structure is employed for the front-side shade roller apparatus (50A) and the rear-side shade roller apparatus (50B). Thus, the front-side shade roller apparatus (50A) (hereinafter merely referred to as the "shade roller apparatus (50)") will be described below.

The shade roller apparatus (50) includes the shading sheet (51), a roller (60) around which the shading sheet (51) can be rolled and from which the shading sheet (51) can be unrolled, a pull bar (70) attached to a front hem of the shading sheet (51) in an unrolling direction thereof. FIG. 3 illustrates a shading state of the shade roller apparatus (50) when the shading sheet (51) is unrolled forward from the roller (60) and the pull bar (70) is positioned at a front end of a movable area.

In the shading state illustrated in FIG. 3, the shade roller apparatus (50) is configured such that the shading sheet (51) contacts an upper end of a head lining (5). The shading sheet (51) contacts the upper end of the head lining (5) in the shading state, and therefore, leakage of external light from the outside to the inside of a vehicle compartment is reduced.

The shading sheet (51) is, on a rear end side thereof, pressed from above by a pressing portion (65) of the housing (30) in the vicinity of the roller (60). The roller (60) is, from below, covered with a head lining (67).

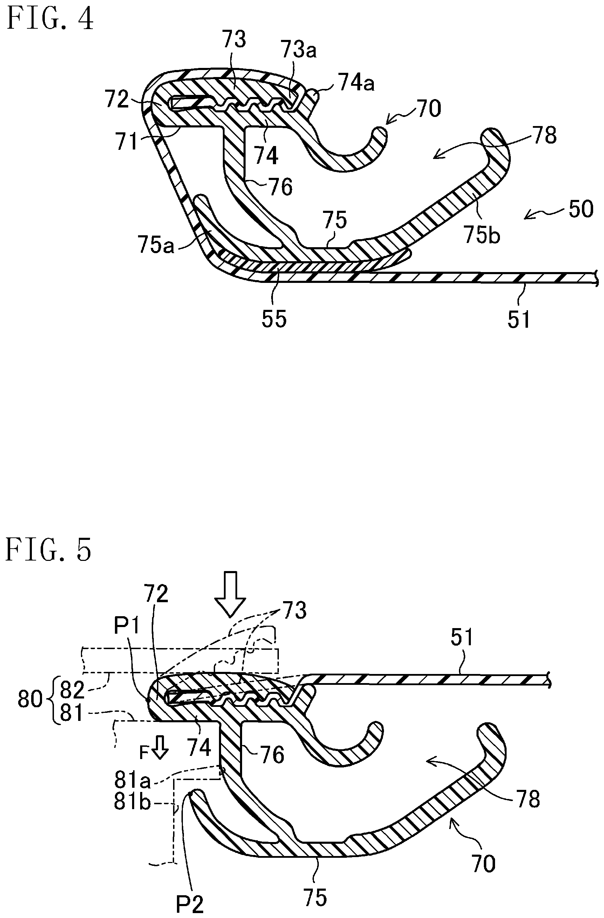

As illustrated in FIG. 2, the pull bar (70) is an elongated member extending across the substantially entire width of the shading sheet (51). Moreover, as illustrated in FIG. 4 as an enlarged sectional view, the pull bar (70) includes a clip portion (a sheet retainer) (71) configured to clip the front hem of the shading sheet (51) across the entire length of the pull bar (70), a bottom wall (75) formed below the clip portion (71), and a leg portion (76) positioned between the clip portion (71) and the bottom wall (75) and configured to connect the clip portion (71) and the bottom wall (75).

The clip portion (71) has an upper clip piece (73) and a lower clip piece (74) configured to open/close with one end portions thereof functioning as a pivot (72). In a state in which the upper clip piece (73) is closed, the pull bar (70) has a retaining piece (74a) configured to hold the shading sheet (51) between the retaining piece (74a) and a tip end portion (73a) of the upper clip piece (73). The retaining piece (74a) is formed as part of the lower clip piece (74).

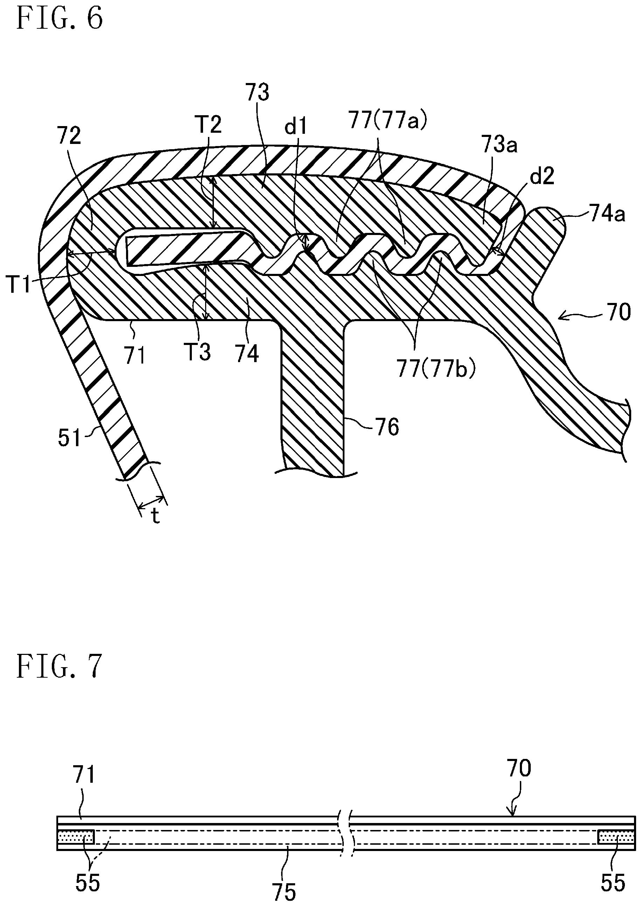

As illustrated in FIG. 6 as an enlarged sectional view of a main portion of the pull bar (70), meshing portions (77) meshing each other to sandwich the shading sheet are formed at opposing surfaces of the upper clip piece (73) and the lower clip piece (74). The meshing portions (77) include an upper meshing portion (77a) formed at the upper clip piece (73), and a lower meshing portion (77b) formed at the lower clip piece (74). Moreover, the pull bar (70) has such a sectional shape that the thickness (T1) of the pivot (72) is less than the thicknesses (T2, T3) of the upper clip piece (73) and the lower clip piece (74). It is configured such that the upper clip piece (73) and the lower clip piece (74) do not deform upon later-described pressing for fixing the shading sheet (51) with the shading sheet (51) being sandwiched between the upper clip piece (73) and the lower clip piece (74) and spring back of the pivot (72) after pressing is small. Moreover, an upper surface of the upper clip piece (73) is curved in an arch shape, and the upper clip piece (73) has a sufficient thickness.

A clearance dimension (d1) between both meshing portions (77a, 77b) is less than the thickness dimension (t) of the shading sheet (51), and is configured such that the clip portion (71) compresses and clips the shading sheet (51). Moreover, a clearance dimension (d2) between the tip end portion (73a) of the upper clip piece (73) and the retaining piece (74a) is also less than the thickness dimension (t) of the shading sheet (51), and at such a portion, is also configured such that the clip portion (71) compresses and clips the shading sheet (51).

The bottom wall (75) is formed across the entire length of the pull bar (70) below the clip portion (71) in FIG. 4. The bottom wall (75) has, at an end portion close to the pivot (72) of the clip portion (71) (in other words, a tip end side (front side) portion with respect to the leg portion (76)), a curved portion (75a) curved upward to the pivot (72). Moreover, elastic pads (55) made of a material (e.g., an EPDM-based rubber sponge such as ethylene or propylene) exhibiting more elasticity than the pull bar (70) are provided between the bottom wall (75) and the shading sheet (51). As illustrated in FIG. 7 as a bottom view of the pull bar (70), the elastic pads (55) are each provided at at least both end portions of the pull bar (70). Moreover, the bottom wall (75) has, at a portion at the rear of the leg portion (76), a holding piece (75b) forming a holding space (78) where a connector (not shown) coupled to the push-pull cables (46).

The pivot (72) projects beyond the curved portion (75a) in a pulling direction (the left direction of FIG. 4) of the pull bar (70). That is, in FIG. 5, a point PI as a front-side tip end of the pivot (72) projects toward the front side of the vehicle with respect to a point P2 as a front-side tip end of the curved portion (75a).

As illustrated in FIG. 5, the pull bar (70) is attached to the shading sheet (51) in such a manner that a tip end portion of the shading sheet (51) is clipped by the clip portion (71) of the pull bar (70). In this state, the lower clip piece (74) is supported by a support portion (81) of a press apparatus (80) while the upper clip piece (73) is being pressed by a pressing portion (82) of the press apparatus (80). The support portion (81) is formed such that a base portion (81b) is positioned in the vicinity of the tip end of the curved portion (75a) in a state in which a top portion (81a) substantially contacts with the leg portion (76), and therefore, the base portion (81b) reliably receives force F acting on the clip portion (71) upon pressing. Thus, the press force is reliably transmitted to the pivot (72), and the clip portion (71) deforms from a state indicated by a virtual line of FIG. 5 to a state indicated by a solid line. Moreover, spring back is reduced as described above.

Thereafter, the shading sheet (51) is rolled back around the pull bar (70) along the upper surface of the upper clip piece (73), the pivot (72), and the bottom wall (75), and therefore, is brought into the state of FIG. 4. In this state, the shade roller apparatus (50) is assembled with the sunroof apparatus (10).

### Operation of Shade Roller Apparatus

In the shade roller apparatus (50) of this embodiment, when a front shading sheet switch (not shown) provided at, e.g., a driver's seat is operated to drive the motor (M1), the shading sheet (51a) of the front-side shade roller apparatus (50A) is opened/closed. Moreover, when a rear shading sheet switch (not shown) is operated to drive the motor (M3), the shading sheet (51b) of the rear-side shade roller apparatus (50B) is opened/closed. The elastic pad (55) is provided on the back side of the shading sheet (51a, 51b). Thus, when the shading sheet (51a, 51b) is opened/closed, force generated due to friction between the head lining (5) and the shading sheet (51a, 51b) is absorbed by the elastic pad (55).

### Advantageous Effects of the Embodiment

According to the present embodiment, the elastic pads (55) are provided between the bottom wall (75) of the pull bar (70) and the shading sheet (51). Thus, the position of the shading sheet (51) in a height direction can be lowered to close a clearance between the shading sheet (51) and another member such as a head lining as an interior material in the vehicle. Thus, shading properties can be enhanced.

Moreover, the position of the shading sheet (51) in the height direction is lowered using the elastic pads (55). Thus, even when the shading sheet (51) is frictioned against other members such as the head lining, force received by the shading sheet (51) at this point is reduced, and therefore, wear of the shading sheet (51) at right and left hem portions thereof can be reduced.

Further, the elastic pads (55) are provided between the shading sheet (51) and the pull bar (70), and therefore, a problem that the shading sheet (51) is wrinkled due to position shift between the shading sheet (51) and the pull bar (70) can be also reduced.

In addition, according to the present embodiment, the elastic pads (55) are provided on bottom and front sides of the pull bar (70), and the shade roller apparatus is provided above a passenger of the vehicle. Thus, the shading sheet (51) is opened/closed in a state in which the elastic pads (55) of the pull bar (70) are positioned in a direction facing the passenger (on the bottom and front sides of the pull bar (70)). Consequently, a portion where the pull bar (70) might contact the passenger is the elastic pad (55), and no problem is caused even upon contact with the passenger.

Moreover, according to the present embodiment, the elastic pads (55) with different thicknesses are used so that a dimension error and an attachment error of a vehicle-side product can be easily absorbed. Thus, the effect of easily reducing a clearance between the shading sheet (51) and the vehicle-side member such as the head lining due to these errors is also provided.

### Variation of the Embodiment

In the above-described embodiment, the elastic pads (55) are each provided at both end portions of the pull bar (70). However, as indicated by a virtual line in FIG. 7, the elastic pad (55) may be provided to extend along the entire length of the pull bar (70). With this configuration, wear of the shading sheet (51) due to contact with the head lining (5) can be reduced across a wider portion (the entirety of the shading sheet (51)).

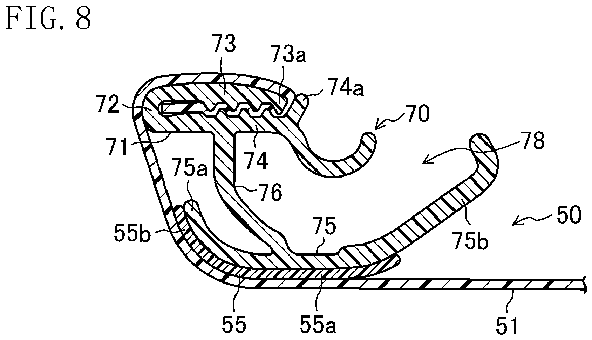

As illustrated in FIG. 8, a pad having a bottom portion (55a) and a front portion (55b) may be, as the elastic pad (55), used at such a position that the bottom portion (55a) and the front portion (55b) are between each of bottom and front surfaces of the pull bar (70) and the shading sheet (51).

### <<Other Embodiments>>

The above-described embodiment may have the following configurations.

For example, in the above-described embodiment, the example where the shade roller apparatus (50) is incorporated into the sunroof apparatus (10) of the vehicle has been described. However, the shade roller apparatus of the present disclosure is not necessarily incorporated into the sunroof apparatus (10), and is applicable to a vehicle configured such that a window (3) is formed at a roof.

Moreover, in the pull bar (70) described in the above-described embodiment, it is configured such that the shading sheet (51) is clipped by the clip portion (71). However, in the present disclosure, the shape of the pull bar (70) may be changed as necessary as long as the elastic pads (55) are provided between the bottom wall (75) of the pull bar (70) and the shading sheet (51).

### INDUSTRIAL APPLICABILITY

As described above, the present disclosure is useful for the structure of the portion where the pull bar is attached to the shading sheet in the shade roller apparatus configured to shade the window formed at the roof of the vehicle.

### DESCRIPTION OF REFERENCE CHARACTERS

- 1: Roof
- 3: Window
- 50: Shade Roller Apparatus
- 51: Shading Sheet
- 55: Elastic Pad
- 60: Roller
- 70: Pull Bar
- 71: Sheet Retainer
- 75: Bottom Wall

## Claims

1. A shade roller apparatus comprising: a shading sheet (51); a roller (60) around which the shading sheet (51) can be rolled and from which the shading sheet (51) can be unrolled; and a pull bar (70) attached to a front hem of the shading sheet (51), the front hem located forward in a direction in which the shading sheet (51) is unrolled,
the shade roller apparatus configured to open and close a window (3) provided in a roof (1) of a vehicle with the shade sheet (51), wherein
the pull bar (70) includes a sheet retainer (71) retaining the shading sheet (51), and a bottom wall (75) located below the sheet retainer (71), **characterized in that**
an elastic pad (55) is provided between the bottom wall (75) and the shading sheet (51), and
the elastic pad (55) includes end portions arranged at at least both ends of the pull bar (70).

2. The shade roller apparatus of claim 1, wherein
the elastic pad (55) is arranged to extend along an entire length of the pull bar (70).

3. The shade roller apparatus of claim 1 or 2, wherein
the elastic pad (55) is arranged between bottom and front surfaces of the pull bar (70) and the shading sheet (51).

## Patentansprüche

1. Rollovorrichtung, umfassend: eine Abschattungsbahn (51), eine Rolle (60), um die die Abschattungsbahn (51) aufgerollt werden und von der die Abschattungsbahn (51) abgerollt werden kann, und eine Zugstange (70), die an einer vorderen Kante der Abschattungsbahn (51) angebracht ist, wobei die vordere Kante vorne in einer Richtung angeordnet ist, in der die Abschattungsbahn (51) abgerollt wird, wobei die Rollovorrichtung dazu ausgestaltet ist, ein in einem Dach (1) eines Fahrzeugs vorgesehenes Fenster (3) mit der Abschattungsbahn (51) zu öffnen und zu schließen, wobei
die Zugstange (70) einen Bahnhalter (71) aufweist, der die Abschattungsbahn (51) hält, sowie eine untere Wand (75), die unter dem Bahnhalter (71) angeordnet ist, **dadurch gekennzeichnet, dass** ein elastisches Kissen (55) zwischen der unteren Wand (75) und der Abschattungsbahn (51) vorgesehen ist und
das elastische Kissen (55) Endabschnitte aufweist, die an mindestens beiden Enden der Zugstange (70) angeordnet sind.

2. Rollovorrichtung nach Anspruch 1, wobei das elastische Kissen (55) so angeordnet ist, dass es sich entlang einer gesamten Länge der Zugstange (70) erstreckt.

3. Rollovorrichtung nach Anspruch 1 oder 2, wobei das elastische Kissen (55) zwischen der unteren und der vorderen Fläche der Zugstange (70) und der Abschattungsbahn (51) angeordnet ist.

## Revendications

1. Appareil pour rouleau de store comprenant : une feuille d'ombrage (51) ; un rouleau (60) autour duquel la feuille d'ombrage (51) peut être enroulée et à partir duquel la feuille d'ombrage (51) peut être déroulée ; et une barre à tirer (70) fixée au niveau d'un ourlet avant de la feuille d'ombrage (51), l'ourlet avant étant situé vers l'avant dans une direction dans laquelle la feuille d'ombrage (51) est déroulée,
l'appareil pour rouleau de store étant conçu pour ouvrir et fermer une fenêtre (3) située dans un toit (1) d'un véhicule avec la feuille d'ombrage (51),
la barre à tirer (70) comprenant un dispositif de retenue de feuille (71) retenant la feuille d'ombrage (51), et une paroi inférieure (75) située sous le dispositif de retenue de feuille (71), **caractérisé en ce que**
un patin élastique (55) est situé entre la paroi inférieure (75) et la feuille d'ombrage (51), et
le patin élastique (55) comprend des parties d'extrémité disposées au moins aux deux extrémités de la barre à tirer (70).

2. Appareil pour rouleau de store selon la revendication 1,
le patin élastique (55) étant disposé pour s'étendre sur toute la longueur de la barre à tirer (70).

3. Appareil pour rouleau de store selon la revendication 1 ou 2,
le patin élastique (55) étant disposé entre les surfaces inférieure et avant de la barre à tirer (70) et la feuille d'ombrage (51).
